Europäisches Patentamt

European Patent Office

Office européen des brevets

(11) Veröffentlichungsnummer: **0 350 783**
**A2**

## (12) EUROPÄISCHE PATENTANMELDUNG

(21) Anmeldenummer: 89112327.5

(51) Int. Cl.⁴: **B60R 16/02**

(22) Anmeldetag: 06.07.89

(30) Priorität: 14.07.88 DE 3823778

(43) Veröffentlichungstag der Anmeldung:
17.01.90 Patentblatt 90/03

(84) Benannte Vertragsstaaten:
AT BE CH DE ES FR GB GR IT LI LU NL SE

(71) Anmelder: BSG-Schalttechnik GmbH & Co. KG
Meisterstrasse 19
D-7460 Balingen 1(DE)

(72) Erfinder: Sämann, Rudolf
Burgstrasse 12
D-7460 Balingen-Ostdorf(DE)

(74) Vertreter: Otte, Peter, Dipl.-Ing.
Tiroler Strasse 15
D-7250 Leonberg(DE)

(54) **Vorrichtung zum Betrieb von an das Bordnetz von mobilen Einheiten angeschlossenen Verbrauchern.**

(57) Bei einer Vorrichtung zum Betrieb von an das Bordnetz von mobilen Einheiten, insbesondere Kraftfahrzeugen angeschlossenen Hochstromverbrauchern wie Lüftermotoren u. dgl. wird vorgeschlagen, den jeweiligen Elektromotor über eine Steuerelektronik an das Bordnetz anzuschließen, wobei die Steuerelektronik eine Impulsbreitensteuerung der dem Motor zugeführten Versorgungsspannung zur Einstellung auf unterschiedliche Leistungsdaten mit Sollwertvorgabe realisiert. Zwischen dieser Steuerelektronik und dem Bordnetzanschluß ist eine Entstörschaltung angeordnet, die neben einer Reihendrossel mindestens einen Kondensator hoher Kapazität umfaßt. Die Reihendrossel weist einen Eisenpulverkern auf und ist so ausgelegt, daß auch bei maximalem, durch sie fließenden Betriebsstrom die Sättigung nicht erreicht wird und eine hinreichend große Induktivitätsreserve für die Impulsbedämpfung zur Verfügung steht.

Fig.1

EP 0 350 783 A2

## Vorrichtung zum Betrieb von an das Bordnetz von mobilen Einheiten angeschlossenen Verbrauchern

Stand der Technik

Die Erfindung geht aus von einer Vorrichtung nach dem Oberbegriff des Anspruchs 1.

Es ist bekannt, daß an das Bordnetz mobiler Einheiten, speziell Kraftfahrzeuge eine Vielzahl von Verbrauchern unterschiedlichster Art angeschlossen sind, wobei an die Qualität der Bordnetzspannung je nach Art der Verbraucher zum Teil höchst unterschiedliche Anforderungen gestellt werden.

Im folgenden wird speziell auf die Gegebenheiten bei der Kraftfahrzeugelektrik genauer eingegangen, die auch ein bevorzugtes Anwendungsgebiet vorliegender Erfindung ist; es versteht sich aber, daß die Erfindung auf diesen Bereich ausdrücklich nicht beschränkt ist.

Ein besonderes Augenmerk bei der Bordstromversorgung von Verbrauchern ist unbedingt darauf zu richten, daß, soweit realisierbar, möglichst keine (vagabundierenden) Impulsspitzen auftreten, die in Bordnetzen zu zum Teil erheblichen Störungen führen können, insbesondere wenn hier empfindlichere Verbraucher wie Rechner, logische Steuerschaltungen u. dgl. angeschlossen sind. Solche Impulsspitzen sind hauptsächlich auf beim Ein- und Ausschalten von Verbrauchern entstehende Einschalt- und Abschaltflanken zurückzuführen, wobei deren Steilheit von besonderer Bedeutung ist. Treten solche, von den Verbrauchern ins Bordnetz übergehende vagabundierende Schaltspitzen gehäuft auf, dann kann es zu erheblichen Beeinträchtigungen im Bereich des Bordnetzes von Kraftfahrzeugen u. dgl. kommen.

Es ist daher notwendig, bestimmte Arten von Stromverbrauchern hoher und sehr hoher Leistung lediglich durch Vorschaltwiderstände für bestimmte gewünschte Leistungsabgaben zu steuern, beispielsweise also bei einem Lüftermotor je nach dessen gewünschter Drehzahl mit den Motorwicklungen in Reihe liegende Widerständen zu- oder abzuschalten. Hierzu ist es zwar möglich, einen Lüftermotor oder die Motoren von Klimageräten u. dgl. auch mit niedrigen Drehzahlen zu betreiben, wie dies im praktischen Betrieb bei einem Kraftfahrzeug fast stets der Fall ist, man muß aber in Kauf nehmen, daß die restliche Leistung, die vom Lüftermotor, wie er im folgenden ausschließlich noch genannt werden soll, nicht verbraucht wird, an dem oder den jeweiligen Vorschaltwiderständen abfällt. Diese müssen daher mit erhöhten Kosten großzügig dimensioniert werden, wobei sich noch das Problem ergibt, daß erhebliche Energiemengen nutzlos verbraucht werden, was neben der allgemeinen ungünstigen Energiebilanz und den sich hierdurch notwendigerweise ergebenden Umweltschäden auch dazu führt, daß die Energieentnahme aus dem Bordnetz in kritische Bereiche mit entsprechend hoher Batteriebelastung (Winterbetrieb) gelangen kann.

Der Erfindung liegt daher die Aufgabe zugrunde, eine Vorrichtung zun Betrieb von an das Bordnetz von mobilen Einheiten, speziell Kraftfahrzeugen angeschlossenen Verbrauchern hoher Leistung zu schaffen, die einerseits die Stromentnahme aus dem Bordnetz auf die Werte begrenzt, die für den tatsächlichen Betrieb des Verbrauchers erforderlich sind, andererseits aber dafür sorgt, daß sich hierdurch keine Impulsbelastung des Bordnetzes ergibt, und zwar auch dann nicht, wenn bei einer hier vorgesehenen Impulsbreitensteuerung der Versorgungsspannung für den Verbraucher mit beliebiger, auch hoher Frequenz sehr hohe Ströme geschaltet werden.

Vorteile der Erfindung

Die Erfindung löst diese Aufgabe mit den kennzeichnenden Merkmalen des Hauptanspruchs und hat den Vor teil, daß eine praktisch verlustfreie Leistungssteuerung von an das Bordnetz von Kraftfahrzeugen u. dgl. angeschlossenen Motoren, insbesondere Lüftermotoren möglich ist, auch wenn diese mit Strömen arbeiten, die bis zu 10 Ampère, gegebenenfalls noch darüber (20 Ampère und mehr) liegen können.

Bei der Grundfunktion vorliegender Erfindung wird daher über ein in Reihe mit dem Motor liegendes Halbleiterschaltelement (vorzugsweise ein MOS-FET) die Versorgungsspannung zum (Lüfter)Motor schlagartig ein- und wieder ausgeschaltet, und zwar mit vergleichsweise hoher Frequenz (10 kHz und darüber, falls gewünscht und im praktischen Ausführungsbeispiel günstig), wobei sich die jeweilige Leistungsabgabe des angeschlossenen Motors aus dem Verhältnis Impulspause zu Impulsdauer bestimmt, also dem Tastverhältnis der ansteuernden Rechteckimpulsfolge der Versorgungsspannung (bzw. des Versorgungsstroms).

Dabei liegt der besondere Vorteil vorliegender Erfindung darin, daß die einer solchen Steuerelektronik zugeordnete Entstörschaltung in der Lage ist, auch erhebliche Impulshübe mit sehr steilen Flanken aufzufangen und einen Übertritt von Impulsspitzen in das allgemeine Bordnetz zu verhindern, und zwar dadurch, daß mit der Steuerelektronik eine Entstördrossel in Reihe liegt, die vorzugsweise als Ringkerndrossel einen Eisenpulverkern aufweist, der dafür sorgt, daß die Drossel bei normalen Betriebsströmen nicht in die Sättigung gelangt, vorzugsweise mindestens noch 50 % der Induktivität als Reserve zur Impulsbedämpfung zur Verfügung stehen.

Eine solche spezielle Eisenpulver-Ringkerndrossel (typische Daten beispielsweise 40 µH, 20 A) besitzt aufgrund dieses Eisenpulverkerns einerseits einen guten Frequenzgang, kann also auftretende Frequenzen hervorragend dämpfen und hat eine "Sättigungsreserve", die sicherstellt, daß auch bei maximalem Betriebsstrom in der Einschaltphase des Reihenhalbleiterschalters zum Motor die das Sättigungsverhalten bestimmende Hysteresekurve erst etwa zur Hälfte ausgefahren ist, also eine erhebliche Induktivitätsreserve für die Bedämpfung der durch die Impulsbreitensteuerung entstehenden hohen Einschalt- und Ausschaltflanken zur Verfügung bleibt, so daß sich in Verbindung mit weiteren Kondensatoren ein bisher nicht erreichbarer Entstörungsgrad bei einer solchen Motoransteuerung ergibt.

Die Erfindung ermöglicht es daher erstmals, Lüftermotoren oder sonstige, im Betrieb hohe Ströme aus dem Bordnetz ziehende Motoren, an welche sie angeschlossen sind, mit einer Impulsbreitensteuerung mit stromgesteuerter Vorgabe anzusteuern und dabei gleichzeitig das Bordnetz nicht mit entstehenden Impulsspitzen zu belasten und im übrigen die Stromentnahme aus dem Bordnetz ohne die Inkaufnahme von hohen Verlustleistungen auf die Werte zu beschränken, die effektiv für den Betrieb des jeweils angeschlossenen Motors erforderlich sind.

Die Erfindung macht daher Vorschaltwiderstände oder sonstige, Energie in Form von Verlustleistung umsetzender Elemente vollkommen entbehrlich und ist auch im Aufwand der Steuerelektronik einfach und kostengünstig herzustellen, da bis auf den Bereich des Reihenleistungs-Halbleiterschaltelements die sonst noch verwendeten Komponenten beliebig hoch integriert werden können.

Es versteht sich, daß zusätzlich zu der speziellen Art der verwendeten Drossel auch die räumliche Anordnung der für die Entstörung ferner noch erforderlichen Kondensatoren hoher Kapazität eine Rolle spielt, und zwar in Verbindung mit einem in fortlaufender Ausgestaltung vorliegender Erfindung verwendeten, geschlossenen Metallgehäuse, welches sowohl die Entstörschaltung als auch die Steuerelektronik aufnimmt und bei eigener Masseverbindung in geometrischer Verteilung die jeweils anderen Anschlußpunkte für die Entstörkondensatoren realisiert.

Durch die in den Unteransprüchen aufgeführten Maßnahmen sind vorteilhafte Weiterbildungen und Verbesserungen der Erfindung möglich.


Zeichnung

Ein Ausführungsbeispiel der Erfindung ist in der Zeichnung dargestellt und wird in der nachfolgenden Beschreibung näher erläutert. Es zeigen:

Fig. 1 schematisiert als Blockschaltbild mit angedeutetem geschlossenen Metallgehäuse die Steuerelektronik für die Ansteuerung des Verbrauchers (Lüftermotors) mit zugeordneter Entstörschaltung;

Fig. 2 in größerem Detail die Entstörschaltung in räumlich-elektrischer Darstellung mit angedeutetem, umgebendem Metallgehäuse;

Fig. 3 die elektrische Darstellung der Enstörschaltung und

Fig. 4 in größerem Detail eine mögliche Ausführungsform der Steuerelektronik zur Impulsbreitenansteuerung eines Hochstrom-Verbrauchers.


Beschreibung der Ausführungsbeispiele

Der Grundgedanke vorliegender Erfindung besteht darin, in Kombination mit einer Impulsbreitenansteuerung durch die hierdurch gewährleistete getaktete Versorgungsspannung einen angeschlossenen Verbraucher, der im folgenden ausschließlich noch, jedoch nicht einschränkend als Lüftermotor bezeichnet wird, auf unterschiedliche Leistungsdaten einzustellen und eine zugeordnete Entstörschaltung so auszubilden, daß die in Verbindung mit Kondensatoren hoher Kapazität die Entstörschaltung bildende Reihendrossel einen Eisenpulverkern (nicht Ferritkern) enthält und so ausgelegt ist, daß auch bei Beaufschlagung mit maximalem Betriebsstrom eine erhebliche Induktivitätsreserve für die Impulsbedämpfung zur Verfügung steht.

Hierbei ist es bekannt, daß man Verbraucher zur Erzielung eines möglichst verlustfreien Betriebs mit unterschiedlichen Daten zur Leistungsabgabe im Sinne einer Impulsbreitensteuerung betreiben kann - so werden z.B. an eine übliche Netzspannung angeschlossene Verbraucher über sogenannte Phasenanschnittsteuerungen über Thyristoren oder Triacs jeweils mit angeschnittenen Halbwellen der Versorgungsspannung beaufschlagt, wobei der Zündwinkel durch Einstellung eines Potentiometers im Ansteuerkreis des Triacs (manuell) bestimmt werden kann.

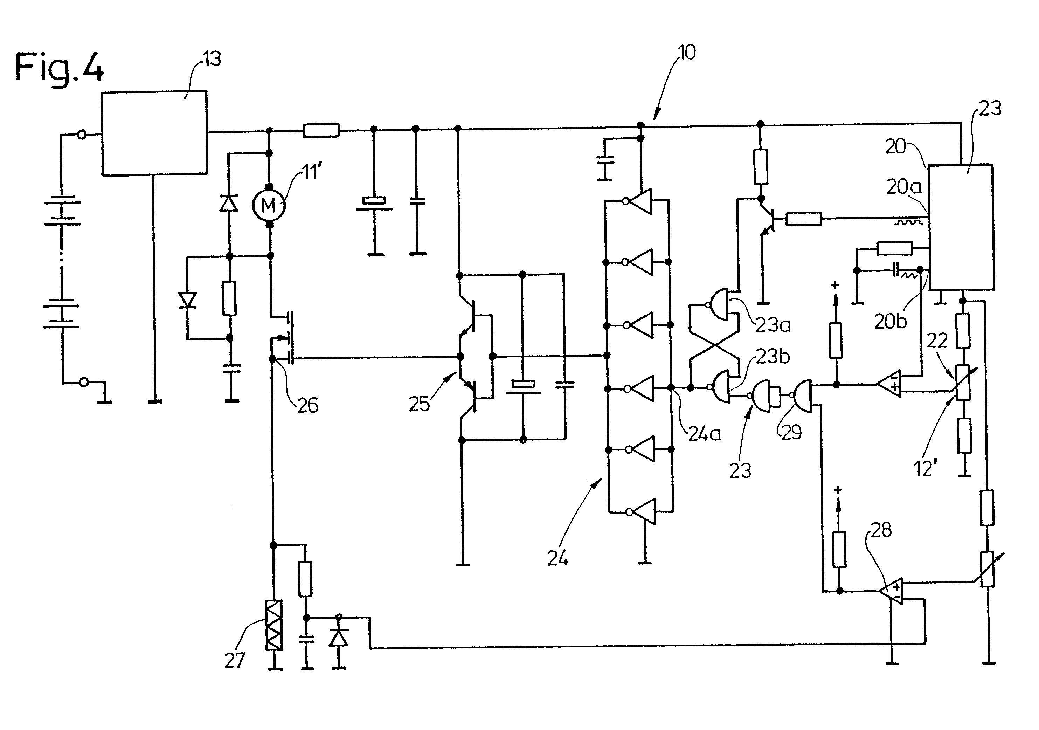

Bei vorliegender Erfindung umfaßt die Steuerelektronik einen mit dem Verbraucher 11, vorzugsweise in Form eines Lüftermotors in Reihe geschalteten elektronischen Schalter, der, wie weiter unten anhand der Darstellung der Fig. 4 noch erläutert wird, durch schnelle gepulste Ansteuerung von seinem leitenden in seinen nichtleitenden Zustand umgeschaltet wird. Je nach Frequenz und je nach hierdurch erreichtem Tastverhältnis ergeben sich in der Versorgungsspannung für den Lüftermotor unterschiedliche Stromzeitflächen, so daß es möglich ist, den Verbraucher mit geringster Leistung bis zur Maximalleistung ohne nennenswerte Verluste lediglich durch Steuerung des Tastverhältnisses der ansteuernden Impulsfolge zu betreiben.

Die Einstellung des unterschiedlichen Tastverhältnisses erfolgt mit Hilfe einer Anordnung 12 zur Sollwertvorgabe, die üblicherweise ein Potentiometer oder Drehwiderstand ist, der praktisch verlustleistungsfrei einem Vergleicher lediglich ein Referenzpotential zuführt, aus welchem sich dann das jeweils gewünschte Tastverhältnis der Versorgungsspannungs Rechteckimpulsfolge ergibt.

Der Aufbau vervollständigt sich durch eine Entstörschaltung 13, die der Steuerelektronik 10 vorgeschaltet ist und diese mit den beiden Anschlußklemmen 14a, 14b der Bordnetzspannung verbindet, wobei bei dem dargestellten Ausführungsbeispiel die Anschlußklemme 14a die Bordnetzversorgungsspannung von 12 V führt, während die Anschlußklemme 14b mit Masse oder Erde (Gnd = Ground) angeschlossen ist.

Beide Schaltungen befinden sich innerhalb eines geschlossenen Metallgehäuses 15, welches vorzugsweise aus Kupfer besteht und in seinem Inneren eine Elektronikplatine oder Schaltplatte aufnimmt, auf welcher die jeweiligen Komponenten der Steuerelektronik bzw. der Entstörschaltung aufgebaut sind.

Nach außen sind die beiden Anschlußverbindungen 16a, 16b für den angesteuerten Lüftermotor, die beiden Signalleitungen 17a, 17b für die Sollwertvorgabe und natürlich die beiden zu den Bordnetzanschlüssen führenden Eingangsverbindungen 18a, 18b geführt.

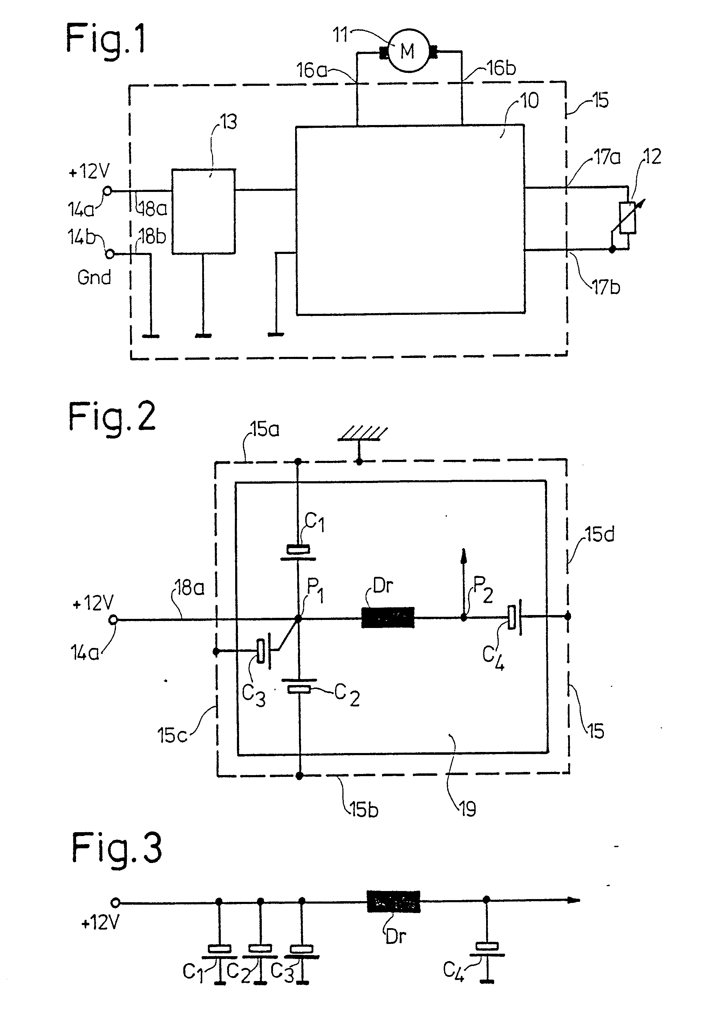

Der elektrisch-räumliche Aufbau der Steuerelektronik/Entstörschaltung ist vorzugsweise so getroffen, wie in Fig. 2 dargestellt, wobei neben der Art und den elektrischen Kennwerten hier auch die mechanische Lage der Entstörbauteile von erheblicher Bedeutung ist. In Fig. 2 ist die innerhalb des geschlossenen Metallgehäuses 15 befindliche Elektronikplatine 19 dargestellt; auf ihr befinden sich die Entstördros sel Dr, vorzugsweise in Form einer Ringkerndrossel und vier Kondensatoren C1, C2 und C3, die zusammen mit dem einen Anschluß der Ringkerndrossel Dr an die Eingangsverbindungsleitung 18a vom positiven Bordnetzanschluß (+12 V) angeschlossen sind. Hierdurch wird ein erster gemeinsamer Schaltungspunkt P1 gebildet, von dem die Kondensatoren C1, C2 und C3 mit ihren einen Anschlüssen ausgehen, und zwar so, daß der Kondensator C1, wenn man das geschlossene Metallgehäuse 15 in der Draufsicht geöffnet ansieht, von der Elektronikplatine 19 ausgehend mit seinem anderen Anschluß an die eine, in der Zeichenebene obere Seitenwand 15a des Metallgehäuses 15 angeschlossen, nämlich verlötet ist, während der Kondensator C2 zur gegenüberliegenden Seitenwand 15b des Metallgehäuses 15 geführt und dort verlötet ist. Der Kondensator C3 ist mit seinem anderen Anschluß mit der Vorderwand 15c des Metallgehäuses 15 verbunden, während der vierte Kondensator C4 mit seinem einen Anschluß mit dem abgewandten Anschluß der Drossel Dr, hierdurch den Schaltungspunkt P2 bildend, verbunden ist und mit seinem anderen Anschluß an der noch freien, letzten Seitenwand 15d des Metallgehäuses 15 anliegt und mit dieser verlötet ist. Dieser geometrische Aufbau in Verbindung mit den speziellen Gegebenheiten der Ringkerndrossel Dr, dem aus Kupfer bestehenden, geschlossenen Metallgehäuse und den sonstigen elektrischen Kennwerten und Daten stellt sicher, daß ein Betrieb des Lüftermotors - und gegebenenfalls anderer, im Sinne einer Impulsbreitensteuerung beaufschlagter Hochstromverbraucher auch beim Bordnetz eines Kraftfahrzeugs möglich ist, ohne daß sich hier durch im Bordnetz Störungen ergeben, die zu Ausfällen oder Fehlfunktionen führen könnten oder die auch nur als unangenehme Begleiterscheinung bei ungestörtem Radioempfang, etwa als Prasseln, auftreten.

Der Anschlußpunkt P2 bildet dann gleichzeitig die weiterführende Verbindung zur Steuerelektronik, deren Einzelbausteine, wie in Fig. 4 gezeigt, sich vorzugsweise ebenfalls auf der Elektronikplatine 19 befinden, jedoch in der Darstellung der Fig. 2 nicht im einzelnen angegeben sind. Dies ist verständlich, weil die gesamte Elektronikschaltung, etwa mit Ausnahme des Halbleiter-Schaltelements in Reihe zu den Motorwicklungen und eines Motorstromsensors in Form eines Chips integriert sein können.

Die Darstellung der Fig. 3 zeigt die elektrische Schaltung der Entstörelemente aus Ringkerndrossel Dr und den vier Kondensatoren C1, C2, C3 und C4, wobei die Kondensatoren beispielsweise die folgenden Werte aufweisen können:

4

| C1, C2 | 300 $\mu$F |
|--------|-----------|
| C3 | 150 $\mu$F |
| C4 | 470 $\mu$F. |

Diese hohen Kapazitäten sind für eine wirksame Entstörung sinnvoll und auch in Verbindung mit der verwendeten Ringkerndrossel angemessen, wobei, wie schon erwähnt, diese Ringkerndrossel einen Eisenpulverkern in spezieller Ausbildung aufweist. Die Ringkerndrossel kann eine Induktivität von 40 $\mu$H bei 20 A aufweisen, wobei der verwendete Eisenpulverkern sicherstellt, daß im Gegensatz zu den bekannten Ferritkernen bei den hier auftretenden, sehr hohen Strömen nicht sofort eine magnetische Übersättigung auftritt, sondern für die Entstörung eine wirkungsvolle Induktivitätsreserve bereitgehalten wird, d.h. mit anderen Worten, die Ringkerndrossel weist. eine Hystereseform auf, die bei maximalen Betriebsströmen mindestens z.B. noch 50 % restliche Induktivität zur Verfügung stellt für die Impulsbedämpfung; sie ist also durch die für den jeweiligen angeschlossenen Verbraucher charakteristischen Maximalströme auf keinen Fall in die Sättigung fahrbar.

In Verbindung mit der Eisenpulver-Ringkerndrossel Dr ist noch darauf hinzuweisen, daß das verwendete Eisenpulver eine nur sehr geringe Korngröße (im Bereich etwa zwischen 4 - 5 $\mu$) haben sollte, um auch sehr hohe Frequenzen sehr wirkungsvoll dämpfen zu können, wobei das verwendete Bindemittel die einzelnen Eisenpulverkörnchen möglichst gut isolieren muß, um höheren Wirbelstromverlusten vorzubeugen. Durch das verwendete Eisenpulver in entsprechender Bindemittelkombination ergibt sich das gewünschte magnetische Verhalten, daß die Ringkerndrossel durch den Betriebsstrom nicht in die Sättigung magnetisiert werden kann, sondern die gewünschte Reserve für die Impulsbedämpfung aufweist.

Der in Fig. 4 lediglich beispielhaft angegebenen möglichen Ausführungsform für eine Steuerelektronik läßt sich zunächst ein integrierter Schaltbaustein 20 entnehmen, der an seinem einen Ausgang 20a eine Rechteckimpulsfolge und an einem anderen Ausgang 20b eine hierzu synchrone Dreieckspannung erzeugt.

Die Dreieckspannung gelangt auf den einen Eingang eines Operationsverstärkers 21 und wird dort mit einem in der Höhe verschiebbaren Spannungspegel verglichen. Hieraus resultiert die Sollwertvorgabe mittels eines stromgesteuerten Sollwertstellers 12′ in Form eines Potentiometers, der in einem Widerstands-Referenzspannungszweig 22 angeordnet ist, der ebenfalls von dem integrierten Baustein 23 gespeist wird. Durch den Vergleich des Referenzspannungspegels mit der Dreieckspannung ergeben sich Schaltpunkte, die über nachgeschaltete Schaltungselemente in Form von miteinander verbundenen bzw. gekoppelten Invertern oder NAND-Gattern 23 am Eingang 24a einer Treiberstufe 24 (bestehend aus einer Vielzahl, parallel geschalteter Inverter/Verstärker) eine in Abhängigkeit zur Sollwertverstellung unterschiedliche Pausen und Impulsdauern aufweisende Rechteckimpulssteuerfolge erzeugen, die über eine nachgeschaltete Push-Pull-Verstärkerschaltung 25 schließlich das Halbleiterschaltelement 26 in Form eines MOS-FETs ansteuert, der in Reihe mit den Motorwicklungen des Lüftermotors 11′ liegt. Ergänzend ist noch eine Stromrückführung vorgesehen, die einen mit dem Lüftermotor 11′ und dem MOS-FET 26 in Reihe liegenden Stromsensor 27 in Form eines möglichst niederohmigen Widerstandes umfaßt, dessen Ausgangsspannung rückgeführt über einen Operationsverstärker 28 auf den einen Eingang eines NAND-Gatters 29 geschaltet ist, dessen anderem Eingang die sich aus dem Vergleich von Dreieckspannung und Referenzspannungspegel ergebenden Ausgangsspannung Schaltpunkte des Operationsverstärkers 21 zugeführt sind. Hierdurch ergibt sich eine Kontrolle (und Begrenzung) des vom Lüftermotor gezogenen Stroms.

Es versteht sich, daß diese Schaltungsbeschreibung nur zum umfassenden Verständnis angegeben ist, da eine Impulsbreitensteuerung mit stromgesteuerter Vorgabe, wie hier realisiert, in einer Vielzahl verschiedener Ausführungsformen und Realisierungsmöglichkeiten, insbesondere auch in hochintegrierter Form als eigener Chip, ausgebildet sein kann. Die NAND-Gatter 23a, 23b bilden hierbei eine Schwingstufe.

Alle in der Beschreibung, den nachfolgenden Ansprüchen und der Zeichnung dargestellten Merkmale können sowohl einzeln als auch in beliebiger Kombination miteinander erfindungswesentlich sein.

**Ansprüche**

1. Vorrichtung zum Betrieb von an das Bordnetz mobiler Einheiten, Kraftfahrzeuge, Lastkraftwagen, Personenkraftwagen, Bussen u. dgl. angeschlossenen Verbrauchern, insbesondere Verbraucher hoher Last wie Lüftermotoren, Elektromotoren für Servoeinrichtungen u. dgl., gekennzeichnet durch die Kombination der folgenden Maßnahmen:
    a) der Elektromotor (11) ist über eine Steuerelektronik (10) an das Bordnetz (14a, 14b) angeschlossen, die eine Impulsbreitensteuerung der dem Motor zugeführten getakteten Versorgungsspannung zur Einstellung auf unterschiedliche Leistungsdaten mit Sollwertvorgabe (12) bewirkt;

b) zwischen der Steuerelektronik (10) und dem Bordnetzanschluß (14a, 14b) ist eine Entstörschaltung (13) angeordnet, die neben einer Reihendrossel (Dr) mindestens einen Kondensator (C1, C2, C3, C4) hoher Kapazität (C > 100 μF) umfaßt;

c) die Reihendrossel (Dr) weist einen Eisenpulverkern auf und ist so ausgelegt, daß auch bei maximalem, durch sie fließendem Betriebsstrom die Sättigung nicht erreicht ist derart, daß eine hinreichend große Induktivitätsreserve für die Impulsbedämpfung zur Verfügung steht.

2. Vorrichtung nach Anspruch 1, dadurch gekennzeichnet, daß die Reihendrossel (Dr) eine Ringkerndrossel mit Eisenpulverkern ist.

3. Vorrichtung nach Anspruch 1 oder 2, dadurch gekennzeichnet, daß das Eisenpulver der Eisenpulver-Ringkerndrossel eine geringe Korngröße (4 - 5 μ) in Verbindung mit einem die Körnchen zueinander gut isolierenden Bindemittel aufweist.

4. Vorrichtung nach einem der Ansprüche 1-3, dadurch gekennzeichnet, daß die Eisenkern-Ringkerndrossel (Dr) und die weiteren Entstörelemente (Kondensatoren C1, C2, C3, C4) in einem geschlossenen Metallgehäuse (15) angeordnet sind.

5. Vorrichtung nach Anspruch 4, dadurch gekennzeichnet, daß die Entstörelemente (Eisenkern-Ringkerndrossel Dr, Kondensatoren C1, C2, C3, C4) zusammen mit den Schaltungselementen der Steuerelektronik (10) auf einer gemeinsamen, innerhalb des metallischen, geschlossenen Gehäuses (15) befindlichen Elektronikplatine (19) angeordnet sind.

6. Vorrichtung nach Anspruch 5, dadurch gekennzeichnet, daß eine vorgegebene Anzahl von Entstörkondensatoren (C1, C2, C3) zusammen mit dem einen Anschluß der Eisenpulver-Ringkerndrossel (Dr) einen ersten, mit der Bordnetzspannung (+ 12 V) verbundenen Schaltungspunkt (P1) bilden, wobei die abgewandten Anschlüsse der Kondensatoren direkt mit dem geerdeten Metallgehäuse verbunden sind.

7. Vorrichtung nach einem der Ansprüche 1-6, dadurch gekennzeichnet, daß das andere Ende der Eisenpulver-Ringkerndrossel (Dr) mit mindestens einem weiteren Kondensator (C4) verbunden ist und einen zur Steuerelektronik weiterführenden Schaltungspunkt (P2) bildet, wobei der mindestens eine weitere Kondensator (C4) ebenfalls, wie die anderen Entstörkondensatoren (C1, C2, C3) mit der Innenwandung des die gesamten Schaltungselemente einschließenden metallischen Gehäuses verbunden, nämlich verlötet ist.

8. Vorrichtung nach einem der Ansprüche 1-7, dadurch gekennzeichnet, daß insgesamt vier Entstörkondensatoren (C1, C2, C3, C4) vorgesehen sind, von denen drei Entstörkondensatoren (C1, C2, C3) mit ihren einen Anschlüssen mit dem ersten gemeinsamen Schaltungspunkt (P1) und mit ihren anderen Anschlüssen mit jeweils drei der Seitenwände (15a, 15b, 15c) des umschließenden Metallgehäuses (15) verbunden sind und daß der vierte Entstörkondensator (C4) mit der letzten Wandung (15d) des Metallgehäuses verbunden ist.

10. Vorrichtung nach einem der Ansprüche 1-9, dadurch gekennzeichnet, daß zur Erzeugung der die Versorgungsspannung bildenden Rechteckimpulsfolge mit veränderlichem Tastverhältnis ein Dreieckspannungsgenerator und ein Gleichspannungspegelsteller (Potentiometer 12') zur Sollwertvorgabe vorgesehen sind, daß nach Vergleich des variablen Gleichspannungspotentials mit der allmählich ansteigenden Rechteckspannung unterschiedliche Schaltpunkte mit Bezug auf die Zeitachse gebildet sind zur Ansteuerung eines nachgeschalteten Rechteckimpulsgenerators (miteinander verkoppelte NAND-Glieder 23a, 23b) und daß die Ansteuerimpulsfolge für die Motorversorgungsspannung nach anschließender Verstärkung (24, 25) dem mit den Motorwicklungen in Reihe liegenden Halbleiterschaltelement (MOS-FET 26) zugeführt ist.

11. Vorrichtung nach Anspruch 10, dadurch gekennzeichnet, daß in Reihe mit dem Motor, dem diesen ansteuernden Halbleiterschaltelement (MOS-FET 26) ein Stromsensor (niederohmiger Widerstand 27) liegt, dessen Ausgangsspannung zur Stromsteuerung und -begrenzung rückgeführt ist.

Fig.1

Fig.2

Fig.3

Fig.4